(19)

**Europäisches Patentamt**

**European Patent Office**

**Office européen des brevets**

(11) **EP 2 189 667 B1**

(12) **EUROPÄISCHE PATENTSCHRIFT**

(45) Veröffentlichungstag und Bekanntmachung des Hinweises auf die Patenterteilung:
**09.11.2011 Patentblatt 2011/45**

(51) Int Cl.:
*F15B 20/00* <sup>(2006.01)</sup>   *B30B 15/28* <sup>(2006.01)</sup>
*F16K 17/10* <sup>(2006.01)</sup>

(21) Anmeldenummer: **08020193.2**

(22) Anmeldetag: **19.11.2008**

(54) **Überlastventil mit einem im Gehäuse integrierten RC-Glied**

Overload relief valve with an RC element integrated in a housing

Soupape anti-surcharge dotée d'un circuit RC intégré dans un boîtier

(84) Benannte Vertragsstaaten:
**DE**

(43) Veröffentlichungstag der Anmeldung:
**26.05.2010 Patentblatt 2010/21**

(73) Patentinhaber: **MOOG GmbH**
**D-71034 Böblingen (DE)**

(72) Erfinder:
• **Händle, Werner**
**71672 Siegelhausen (DE)**

• **Zervas, Bernhard**
**72119 Ammerbuch (DE)**

(74) Vertreter: **Grünecker, Kinkeldey,**
**Stockmair & Schwanhäusser**
**Leopoldstrasse 4**
**80802 München (DE)**

(56) Entgegenhaltungen:
**DE-A1- 2 018 243    DE-A1- 4 436 742**
**DE-A1- 19 643 104   DE-U1- 7 715 366**
**US-A- 4 015 620**

**Beschreibung**

Die vorliegende Erfindung betrifft ein hydraulisches Lastschaltventil mit einem Gehäuse mit einem Steuerraum, einem Lastkanal, mindestens einem Entlastungskanal und einem im Gehäuse gegen eine Feder zwischen einer Normal- und einer Überlaststellung verschiebbar geführten Ventilkörper, wobei der Ventilkörper in der Normalstellung den Lastkanal und den Steuerraum von dem mindestens einen Entlastungskanal trennt, wobei das Gehäuse eine Düseneinrichtung aufweist, mittels derer der Lastkanal mit dem Steuerraum zumindest in der Normalstellung derart verbindbar ist, dass der Ventilkörper, die Düseneinrichtung und der Steuerraum ein hydraulisches RC-Glied bilden, das derart dimensioniert ist, dass der Ventilkörper im Wesentlichen unabhängig vom Lastdruck bei Überschreiten einer vorbestimmten Druckanstiegsgeschwindigkeit in die Oberlaststellung übergeht und dabei den Lastkanal und den Steuerraum mit dem mindestens einen Entlastungskanal verbindet.

Ein solches Lastschaltventil ist aus der DE 19643104 A1 bekannt. Bei dieser Vorrichtung wird ein Differenzierventil zum Vorsteuern eines Druckschaltnutventils verwendet, um einen schnellen Druckanstieg zu erfassen.

Ein weiteres schnell schaltendes hydraulisches Lastschaltventil ist z.B. aus der US 4015620 bekannt. Derartige Lastschaltventile weisen, nach Erreichen des eingestellten Druckes, eine Ansprechzeit von etwa 2 Millisekunden auf und werden z.B. bei Hochgeschwindigkeitspressen eingesetzt, um die Vorrichtung vollständig zu schützen. Weitere typische Anwendungen sind Teststände und Walzenanlagen in der Stahl-, Aluminium-, Papier- und Kunststoffverarbeitung. Solche hydraulischen Lastschaltventile sind wesentlich schneller als einfache Druckbegrenzungsventile und schützen Maschinen und Anlagen im Störungsfall vor hohen Kräften, die zu erheblichen Schäden führen können. Eine möglichst frühzeitige und extrem schnelle Reaktion des Lastschaltventils auf einen Überlastfall verbessert die Schutzfunktion. Zwar weist das Lastschaltventil aus der US 4015620 bereits ein schnelles Ansprechen auf. Für verschiedenste Anwendungszwecke ist es jedoch wünschenswert, ein früheres Ansprechen des Ventils bereitzustellen, wodurch ein noch größerer Schutz für teure Anlagen gewährleistet ist.

Es ist die Aufgabe der vorliegenden Erfindung, ein hydraulisches Lastschaltventil der eingangs genannten Art bereitzustellen, das ein früheres Ansprechen des Ventils beim Überlastfall gewährleistet, um Druckspitzen in der Anlage auf ein Minimum zu beschränken.

Hierzu ist bei einem hydraulischen Lastschaltventil der eingangs genannten Art vorgesehen, dass der Ventilkörper eine Pilotstufe zum Trennen und Öffnen des Steuerraums vom und zum mindestens einen Entlastungskanal und eine Laststufe zum Trennen und Öffnen des Steuerraums vom und zum mindestens einen Entlastungskanal aufweist. Am Ventilkörper (z.B. einem Ventilkolben) sind somit beide Stufen integriert, wodurch wiederum kurze Hydraulikwege innerhalb des Lastschaltwegs realisierbar sind..

Das Lastschaltventil ist in der Lage, bereits vor Erreichen eines bestimmten Druckniveaus allein aufgrund Überschreitens einer vorbestimmten Druckanstiegsgeschwindigkeit zu schalten. Dabei können dem Lastkanal und dem Steuerraum in der Überlaststellung des Ventilkörpers jeweils ein eigener Entlastungskanal zugeordnet sein oder beide sind mit dem gleichen Entlastungskanal verbunden. Die Dimensionierung des hydraulischen RC-Glieds (Die Düse bzw. Blende definiert den hydraulischen Widerstand R und das Steuervolumen im Steuerraum die hydraulische Kapazität $C_H$) definiert die Schaltcharakteristik. Ein Düsenkanal der Düseneinrichtung ist möglichst kurz und/oder diese weist eine genau dimensionierte Blende bzw. Düse auf. Bei geschlossenem Ventil lässt sich das Ventil über folgendes Ersatzschaltbild beschreiben:

$$p_{sys}(t) \qquad \Delta p_{Blende}(t) \qquad\qquad p_{Kav}(t)$$

$$R_{Blende} \qquad\qquad C_H$$

**Blende** **Steuerraum**

Daraus ergibt sich für den Fachmann folgender Zusammenhang für die Übertragungsfunktion des RC-Gliedes:

Das entspricht:

$$\frac{\Delta p_{Blende}}{p_{sys}} = \frac{1}{1 + \dfrac{R_{Blende}}{C_H s}}$$

mit

s = Variable der Laplacetransformation
$\Delta p_{Blende}$ = Druckabfall an Blende
$\Delta p_{AP}$ = Arbeitspunkt der Blende
$C_H$ = Hydraulische Kapazität
$p_{sys}$ = Druck im System
$p_{kav}$ = Druck im Steuerraum
$R_{Blende}$ = Blendenwiderstand

Die hydraulische Schaltung soll so eingestellt werden, dass bei einer bestimmten Druckanstiegsgeschwindigkeit im System ein definierter Druckabfall über einer Blende entsteht, der zum Schalten des Ventils (Überwinden der Federkraft) führt.
Hierbei gilt:

A = Blendenquerschnitt
$p$ = Dichte des Öls
$V_{Kav}$ = Volumen des Steuerraums
$\alpha_D$ = Durchflusskoeffizient
$E_{Ol}$ = Kompressionsmodul des Öls

$\dfrac{\Delta p_{sys}}{\Delta t}$ = Druckanstiegsgeschwindigkeit im System, die zum Auslösen des Ventils führt.

Daraus berechnen sich der Blendenwiderstand und die hydraulische Kapazität.
Für den Widerstand in der Blende gilt linearisiert im Arbeitspunkt $\Delta p_{AP}$:

$$R_{Blende} = A \alpha_D \sqrt{\frac{1}{2 \rho \Delta p_{AP}}}$$

Für die hydraulische Kapazität gilt:

$$C_H = \frac{V_{Kav}}{E_{Ol}}$$

3

Bei einer konstanten Druckanstiegsgeschwindigkeit im System

$$p_{sys} = \frac{\Delta p_{sys}}{\Delta t} t$$

Und der oben beschriebenen Übertragungsfunktion ergibt sich für den Blendenwiderstand über der Blende:

$$R_{Blende} = \frac{C_H}{\Delta p_{Blende}} \frac{\Delta p_{sys}}{\Delta t}$$

Aus diesen Parametern lässt sich nun für den Fachmann das Volumen des Steuerraums $V_{Kav}$ als auch der Blenden- bzw. Düsenquerschnitt A hinsichtlich einer gewählten Druckanstiegsgeschwindigkeit aufeinander abstimmen sowie die geeignete Druckfeder (Schließkraft) wählen.

Wird das Ventil nur minimal geöffnet, fällt der Druck im Steuerraum schlagartig ab und der gesamte Systemdruck beschleunigt das weitere Öffnen des Ventils. Dieser Mitkoppeleffekt ist verantwortlich für das extrem schnelle Öffnen des Ventils.

Charakteristisch für Überlastfälle sind extrem hohe Druckanstiegsgeschwindigkeiten bis zu einigen 1000 bar pro Sekunde.

Das extrem schnelle Ansprechen des Lastschaltventils bereits auf die Druckanstiegsgeschwindigkeit und das schnelle Öffnen erhöht die Schutzfunktion für Anlagen, da Druckspitzen weitgehend vermieden werden.

Rechnerischer Vergleich von bekannter Technik mit vorliegender Erfindung:

Beispiel entspricht realen Bedingungen:

|  | Bekannte Technik | Vorliegende Erfindung |
| --- | --- | --- |
| Lastdruck vor Überlast | 100 bar | 100 bar |
| Eingestellter Auslösedruck an Ventil | 350 bar | 350 bar |
| Auslösewert bei Druckanstiegsgeschwindigkeit | Nicht möglich | 9.000 bar/s |
| Druckanstiegsgeschwindigkeit durch Überlast | 10.000 bar/s | 10.000 bar/s |
| Totzeit bis Ventil reagiert | 25 ms | 0 ms |
| Öffnungszeit des Ventils | 2 ms | 2 ms |
| Gesamtzeit bis Antrieb entlastet ist | 27 ms | 2 ms |

Bevorzugt ist der Steuerraum zumindest in der Normalstellung bis auf die Düseneinrichtung geschlossen oder weist ein voreingestelltes Druckniveau (z.B. externer Steuerdruck) auf. Das bedeutet, dass der Ventilkörper gegen das im Steuerraum eingeschlossene Steuervolumen arbeitet (wenn RC-Glied aktiv). Ein weiteres Zuströmen erfolgt einzig und allein über die Düseneinrichtung. Hierdurch lässt sich eine sehr genaue Schaltcharakteristik erzielen.

Von besonderem Vorteil ist es gemäß einer Ausführungsform, wenn die Pilotstufe des Ventilkörpers mit einem ersten Entlastungskanal und die Laststufe mit einem zweiten Entlastungskanal verbindbar ist. Hierdurch werden Rückwirkungen beim Öffnen der Laststufe auf das Öffnen der Pilotstufe für die Entlastung des Steuerraums verhindert. Diese Rückwirkungen treten aufgrund von Druckspitzen im zweiten Entlastungskanal auf, die durch Induktivität und Kapazität des zweiten Entlastungskanals verursacht werden.

Damit bei einer Variante Einfluss auf das Verhalten des RC-Gliedes genommen wird, kann die Düseneinrichtung einen veränderbaren Strömungsquerschnitt aufweisen. Der sich verändernde Strömungswiderstand der Düseneinrichtung hat unmittelbaren Einfluss auf das Öffnungsverhalten des RC-Gliedes, wodurch unterschiedliche auslösende Druckanstiegsgeschwindigkeiten einstellbar sind. Günstigerweise kann hierbei der Strömungsquerschnitt der Düseneinrichtung stufenlos veränderbar sein, so dass möglichst alle Werte für Druckanstiegsgeschwindigkeiten im Einstellbereich angesteuert werden können.

Hierbei ist es weiter günstig, wenn gemäß einer Variante die Düseneinrichtung ein Proportionalventil umfasst. Mittels eines Proportionalventils lässt sich der Strömungsquerschnitt der Düseneinrichtung sehr genau steuern bzw. regeln, um die gewünschte Einstellung für das RC-Glied zu erhalten.

Für einige Anwendungszwecke kann es aber auch gewünscht sein, wenn das Ventil in anderer Weise betrieben wird und nicht das Verhalten eines RC-Gliedes aufweist. Hierzu kann die Düseneinrichtung zu- und abschaltbar ausgestaltet sein. Das bedeutet, dass die Verbindung mittels der Düseneinrichtung zwischen dem Lastkanal und dem Steuerraum auch unterbrochen werden kann. Sofern eine Druckbegrenzungsfunktion vorgesehen ist, kann diese so angeordnet sein, dass sie bei Bedarf gemeinsam mit der Düseneinrichtung abgeschaltet werden kann.

In diesem Zusammenhang hat sich eine weitere Konstruktionsvariante als vorteilhaft herausgestellt, bei der ein Schaltventil vorgesehen ist, das wahlweise die Düseneinrichtung zu- oder abschaltend ausgestaltet ist, bei der das Gehäuse einen externen Steuerdruckanschluss aufweist und bei der das Schaltventil weiter derart ausgestaltet ist, dass im abgeschalteten Zustand der Düseneinrichtung der Steuerraum mit dem externen Steuerdruckanschluss verbunden ist. Über diesen Steuerdruckanschluss kann das Öffnungsvefialten des Ventils bei ausgeschalteter RC-Funktion eingestellt werden. Auch bei dieser Konstruktionsvariante kann, sofern eine Druckbegrenzungsfunktion vorgesehen ist, diese so angeordnet sein, dass sie bei Bedarf gemeinsam mit der Düseneinrichtung abgeschaltet werden kann.

Eine einfache konstruktive Variante zum Verändern des Verhaltens des RC-Gliedes sieht vor, dass die Düseneinrichtung mindestens zwei den Lastkanal mit dem Steuerraum zumindest in der Normalstellung verbindbare Düsenkanäle aufweist und zumindest einer der Düsenkanäle zu- und abschaltbar ausgestaltet ist. Bevorzugt werden hierzu Düsenkanäle parallel zueinander gekoppelt. Diesen können einen gleichen Düsenquerschnitt oder unterschiedliche Düsenquerschnitte sowie einstellbare Düsenquerschnitte aufweisen. Durch Zu- und Abschalten mindestens eines dieser Düsenkanäle lässt sich der gewünschte Einfluss auf das RC-Glied nehmen. Auch ein vollständiges Abschalten könnte hier integriert sein. Des Weiteren kann die Anzahl der Düsenkanäle frei nach dem jeweils gewünschten Eigenschaften gewählt werden. Jeder dieser Düsenkanäle kann zu- und abschaltbar ausgestaltet sein.

Ein weiterer Einfluss auf das Verhalten des RC-Gliedes und somit auf die Einstellung der vorbestimmten Druckanstiegsgeschwindigkeit zum Auslösen des hydraulischen Lastschaltventils lässt sich bei einer Ausführungsform erreichen, bei der der Steuerraum ein veränderbares Volumen aufweist. Eine Variante sieht hierzu vor, dass der Steuerraum in mindestens zwei mittels mindestens eines Schaltventils voneinander trennbare Steuerraumvolumenbereiche unterteilt ist. Hier könnten z.B. mehrere Kammern hinter- oder nebeneinander geschaltet sein, die jeweils über ein Schaltventil miteinander verbindbar oder voneinander trennbar sind. Der Öffnungsquerschnitt dieser Schaltventile muss dann entsprechend so gewählt sein, dass nur ein möglichst geringer Einfluss auf das Verhalten des RC-Gliedes erfolgt.

Gemäß einer Ausführungsform kann die Pilotstufe des Ventilkörpers derart ausgestaltet sein, dass diese beim Öffnungsvorgang erst den Steuerraum zum mindest einen Entlastungskanal öffnet und nach einer vorbestimmten Wegstecke und vor einem mechanischen Anschlag den Steuerraum wieder von dem mindestens einem Entlastungskanal trennt. Diese Ausgestaltung bewirkt ein frühzeitiges automatisches Abbremsen des Ventilkörpers, so dass dieser noch vor einem mechanischen Anschlag zum Stehen kommt. Der Arbeitshub, Bremsweg und die Bremscharakteristik des Ventilkörpers werden mit der Steuergeometrie bestimmt. Hierzu kann jede Steuerkante mit beliebigen Steuergeometrien ausgestaltet werden, z.B. gerade Steuerkante, (Halb-)kreise, Rechtecke, Quadrate, Dreiecke etc.

Von Vorteil ist es in diesem Zusammenhang, wenn der Ventilkörper besonders massearm ausgestaltet ist, um die Öffnungsdynamik zu verbessern und die Bremskräfte zu reduzieren.

Von weiterem Vorteil ist es, wenn gemäß einer Variante an dem Steuerraum ein Druckbegrenzungsventil oder Proportionai-üruckbegrenzungsventü angeschlossen ist. Bei langsamen Druckanstiegen löst das Lastschaltventil auch dann aus, wenn im Steuerraum der am Druckbegrenzungsventil oder Proportional-Druckbegrenzungsventil eingestellte Schaltdruck erreicht ist. Hierdurch werden Überlastfälle abgedeckt, bei denen die Druckanstiegsgeschwindigkeit unterhalb des Schwellwerts liegt. Prinzipiell ist es auch möglich, ein solches Auslösen des Ventils bei langsamen Druckanstiegen über einen extern einstellbaren Druck im Steuerraum erfolgen zu lassen.

Eine sehr kompakte Bauweise lässt sich bei einer Ausführungsform dadurch erzielen, dass das Druckbegrenzungsventil oder Proportional-Druckbegrenzungsventil im Gehäuse integriert ist. Aufgrund der kurzen Wege lässt sich auch das Ansprechvefialten des Druckbegrenzungsventils oder Proportional-Druckbegrenzungsventils verbessern.

Eine sehr kompakte Bauweise wird auch dann erreicht, wenn gemäß einer Ausgestaltungsform das Gehäuse von einem Steuerblock gebildet ist und zumindest die Düseneinrichtung, der Steuerraum, der Lastkanal und der mindestens eine Entlastungskanal im Steuerblock integriert sind.

Günstigerweise sind der erste Entlastungskanal und der zweite Entlastungskanal jeweils als getrennte, mit einem Tank verbundene Kanäle ausgestaltet. Durch unabhängige Entlastungskanäle lässt sich auch die Öffnungsgeschwindigkeit erhöhen. Bei dem zweiten Entlastungskanal handelt es sich in aller Regel um die Haupttankleitung, die aufgrund der räumlichen Trennung nunmehr keinen negativen Einfluss auf die Entlastung des Steuerraums durch die Pilotstufe hat, wodurch das Ventilverhalten nicht negativ beeinflusst wird.

Zwar besteht prinzipiell auch die Möglichkeit, den Abflusskanal des Druckbegrenzungsventils oder Proportional- Druckbegrenzungsventils in den ersten Entlastungskanal münden zu lassen; es können jedoch Einflüsse weiter vermieden werden, wenn das Druckbegrenzungsventil oder Proportional- Druckbegrenzungsventils eigenständig am Tank angeschlossen ist. Die Anordnung der Last- und Pilotstufe an ein und demselben Ventilkörper eröffnet die Möglichkeit, auch die Steuerquerschnitte im Vergleich zum Stand der Technik erheblich zu vergrößern, wodurch sich die Öffnungsgeschwindigkeit nochmals erhöhen lässt.

Als Feder kann eine Druckfeder eingesetzt werden, die sich einerseits im Steuerraum am Gehäuse und andererseits am Ventilkörper abstützt und in der Normalstellung den Ventilkörper gegen einen Ventilsitz oder Pilot- und/ oder Laststufe drückt. Durch die Integration der Druckfeder im Steuerraum wird wiederum eine kompakte Bauweise erzeugt.

Gemäß einer weiteren Ausgestaltung kann das RC-Glied derart dimensioniert sein, dass die vorbestimmte Druckanstiegsgeschwindigkeit im Bereich von 1000 bis 100000 basis liegt. Hierbei handelt es sich um einen durch Simulation ermittelten Bereich, der für viele Fälle zum verbesserten Schutz einer Anlage führt.

Des Weiteren kann das Lastschaltventil wahlweise in Kolben-Hülsen-Bauart oder als Kolben in Gehäusekonstruktionen ausgeführt werden. Es besteht auch die Möglichkeit, einen gehärteten Kolben zu verwenden, der in einer gehärteten Hülse verschiebbar angeordnet ist. Selbstverständlich kann das hydraulische Lastschaltventil in verschiedenen Baugrößen hergestellt werden, um insbesondere auf die unterschiedlichen Lastanwendungsfälle abgestimmt zu sein. Eine weitere Möglichkeit besteht darin, den Kolben mit Strömungskraftkompensation auszustatten.

Die Schaltventile zur gezielten Veränderung des Lastschaltventil-Verhaltens können alternativ als Kolben- oder als Sitzventile ausgeführt sein. Alle oder ausgewählte Tankleitungen können im Gehäuse, insbesondere im Steuerblock, zusammengefasst werden.

Im Sinn der Erfindung soll unter dem Begriff "Gehäuse" auch eine freie Verrohrung hinzugezählt werden, die außerhalb eines den Ventilkörper aufnehmenden Steuerblock vorhanden ist und zur Ausgestaltung und Funktionalität des gewünschten RC-Gliedes bestimmt ist.

Prinzipiell besteht auch die Möglichkeit, einen Düsenkanal im Ventilkörper anzuordnen, der den Lastkanal mit dem Steuerraum verbindet und zusätzlich eine Düseneinrichtung im Gehäuse vorzusehen, um Veränderungen am RC-Glied herbeizuführen.

Im Folgenden werden Ausführungsbeispiele der vorliegenden Erfindung anhand einer Zeichnung näher erläutert. Es zeigen:

Fig. 1     eine schematische Darstellung einer ersten Ausführungsform eines hydrauli- schen Lastschaltventils,

Fig. 2     eine schematische Darstellung eines zweiten Ausführungsbeispiels eines hyd- raulischen Lastschaltventils,

Fig. 3     eine schematische Darstellung eines dritten Ausführungsbeispiels eines hydrau- lischen Lastschaltventils,

Fig. 4     eine schematische Darstellung eines vierten Ausführungsbeispiels eines hyd- raulischen Lastschaltventils,

Fig. 5     eine schematische Darstellung eines fünften Ausführungsbeispiels eines hyd- raulischen Lastschaltventils und

Fig. 6     eine schematische Darstellung eines sechsten Ausführungsbeispiels eines hyd- raulischen Lastschaltventils,

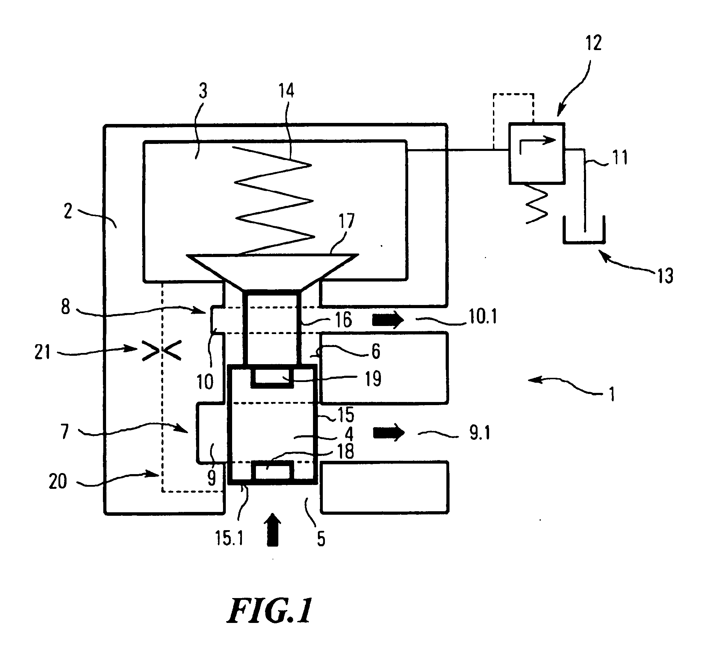

Die in den Fig. 1 bis 6 dargestellten Lastschaltventile dienen z.B. einer Überlastsicherung eines Presszylinders, der mittels einer hydraulischen Schaltung zur Kraft- und Bewegungssteuerung verbunden ist. Auf den Presszylinder wirkt eine mechanische Kraft und bei Überlast sind hohe Druckanstiegsgeschwindigkeiten typisch. Neben Pressen können derartige hohe Druckanstiegsgeschwindigkeiten auch bei Testständen und Walzenanlagen in der Stahl-, Aluminium-, Papier- und Kunststoffverarbeitung auftreten. Jedoch sind auch weitere Anwendungen möglich. Der Presszylinder steht mittels einer Ventilleitung mit einem schnell schaltenden Lastschaftventil 1 in Verbindung.

Anhand der Fig. 1 soll nunmehr im Folgenden ein erstes Ausführungsbeispiels eines hydraulischen Lastschaltventils 1 näher erläutert werden.

Das Lastschaltventil 1 umfasst ein Gehäuse 2 mit einem Steuerraum 3 und einem im Gehäuse 2 verschiebbar geführten Ventilkolben 4. Des Weiteren ist das Gehäuse 2 mit einem Lastkanal 5 versehen, der an die zu schützende Einheit angeschlossen ist. Der Lastkanal 5 geht im Gehäuse 2 in die Ventilbohrung 6 über, die einen durchgängig gleichen Durchmesser bis hin zum Steuerraum 3 aufweist, um möglichst große Strömungsquerschnitte bereitzustellen.

Der Ventilkolben 4 und die zugehörige Ventilbohrung 6 sind unterteilt in eine Laststufe 7 und eine Pilotstufe 8. Für die Laststufe 7 befindet sich im Gehäuse 2 ein Ringkanal 9, der in einen Tankkanal 9.1 (Entlastungskanal) mündet, der mittels einer nicht dargestellten Tankleitung zu einem Hydrauliktank führt. In der schematischen Darstellung ist ein relativ großes Spiel zwischen Ventilkolben 4 und Ventilbohrung 6 eingezeichnet, das bei einer tatsächlichen Ausgestaltung entsprechend der gewünschten Dichtwirkungen wesentlich kleiner ist.

Die Pilotstufe 8 weist im Gehäuse 2 einen Ringkanal 10 auf, der in einen Tankkanal 10.1 mündet und mittels einer nicht dargestellten Tankleitung mit dem gleichen (oder einem separaten) Hydrauliktank in Verbindung steht.

Der Steuerraum 3 steht mittels einer Tankleitung 11 und einem in der Tankleitung 11 angeordneten Druckbegrenzungsventil 12 mit dem Hydrauliktank 13 in Fluidverbindung. Bei dem Hydrauliktank 13 kann es sich um den gleichen Hydrauliktank handeln, der mit den Tankleitungen 9.1 und 10.1 verbunden ist. Allerdings ist auch eine separate Ausgestaltung möglich.

Der Ventilkolben 4 wird mittels einer im Steuerraum 3 angeordneten Druckfeder 14 in die in Fig. 1 dargestellte Normalstellung gedrückt. In dieser Normalstellung ist sowohl der Lastkanal 5 vom Ringkanal 9 und Tankkanal 9.1 getrennt als auch der Steuerraum 3 vom Ringkanal 10 und Tankkanal 10.1 getrennt. Hierzu weist der Ventilkolben 4 einen zylindrischen an den Querschnitt der Ventilbohrung 6 angepassten Ventilbereich 15 auf. Dieser Ventilbereich 15 geht in der Normalstellung im Bereich des Ringkanals 9 in einen im Durchmesser verringerten Ventilmittelbereich 16 über, an den sich ein kegelstumpfförmiger Ventilkopf 17 zum Verschließen des Steuerraums 3 anschließt. An der Stirnseite des Ventilbereichs 15 befindet sich eine schematisch angedeutete Steuergeometrie (Steuerkontur) 18. Ähnliches ist im Übergangsbereich von dem Ventilbereich 15 zum Ventilmittelbereich 16 vorgesehen (siehe Bezugsziffer 19).

In dem Gehäuse 2 (Steuerblock) erstreckt sich von einem Bereich im Lastkanal 5 vor einer Stirnfläche 15.1 des Ventilbereichs 15 bis zu dem Steuerraum 3 eine als Düsenkanal 20 (strichlierte Linie) ausgestaltete Düseneinrichtung. Der Düsenkanal 20 weist zumindest an einer Stelle eine genau definierte Düse 21 (z.B. Blende) auf. Bei dem gezeigten Ausführungsbeispiel befindet sich die Düse in etwa parallel zum mittleren Bereich des Ventilkolbens 4 (auf der Höhe des Ventilmittelbereichs 16).

Das Zusammenspiel von dem Düsenkanal 20 mit der Düse 21 und dem Volumen $V_{kav}$ des Steuerraums 3 erzeugt ein hydraulisches RC-Glied. Sobald die Druckanstiegsgeschwindigkeit $\dfrac{\Delta p_{sys}}{\Delta t}$ im Lastkanal 5 größer oder gleich des mit dem RC-Glied eingestellten Wertes ist, ist die auf den Ventilkolben 4 einwirkende Kraft so hoch, dass sich der Ventilkolben 4 gegen die Kraft der Druckfeder 14 in den Steuerraum 3 hineinbewegt.

Dieser zu wählende Grenzwert für die Druckanstiegsgeschwindigkeit hängt vom jeweiligen zu schützenden System ab. Entsprechend müssen hierzu das Steuerraumvolumen und der Strömungswiderstand der Düseneinrichtung aufeinander abgestimmt werden.

Im Folgenden wird die Wirkungs- und Funktionsweise des ersten Ausführungsbeispiels näher erläutert.

Im Normalbetrieb nimmt das Lastschaltventil 1 die in der Fig. 1 dargestellte Normalstellung ein. Aufgrund der Tatsache, dass der Steuerraum 3 in der Normalstellung vollständig verschlossen ist, lässt sich auch das Ölvolumen im Steuerraum 3 nicht verdrängen. Um auch bei langsamen Druckanstiegen einen Überlastschutz bereitzustellen, ist an dem Steuerraum 3 das Druckbegrenzungsventil 12 angeschlossen, das bei Erreichen eines bestimmten Überdrucks die Tankleitung 11 durchschaltet, so dass sich der Ventilkolben 4 nach oben bewegt. Bei langsamen Druckanstiegen erreicht der Überdruck auch den Steuerraum 3 über den Düsenkanal 20. Die Hydraulikflüssigkeit kann dann bei geöffnetem Lastventil 1 über den Ringkanal 9, den Tankkanal 9.1 in den Tank abfließen.

Das Lastschaltventil 1 ist aber auch in der Lage, bereits bei Überschreiten einer vorgegebenen Druckanstiegsgeschwindigkeit zu öffnen. Aufgrund der Übertragungsfunktion des RC-Gliedes einschl. des Düsenkanals 20 und der Düse 21 wird ab einer bestimmten Druckanstiegsgeschwindigkeit die Schließkraft der Druckfeder 14 überwunden und der Ventilkolben 4 in die geöffnete Überlaststellung überführt. Dieses Öffnen erfolgt weitaus schneller, als bei druckgesteuerten Überlastventilen, die erst ab einem bestimmten eingestellten Überdruck öffnen. Aufgrund des relativ großen Öffnungsquerschnitts sowohl in der Laststufe 7 als auch in der Pilotstufe 8 werden sehr schnell große Strömungsquerschnitte zur Verfügung gestellt, die auch einen schnellen Öffnungsvorgang des Ventils 1 herbeiführen. In der Laststufe 7 steht bereits nach einer geringfügigen Bewegung des Ventilkolbens 4 der gesamte Strömungsquerschnitt der Ventilbohrung 6 zur Verfügung. In der Pilotstufe 8 steht ebenfalls nach einer geringen CSffnungsbewegung des Ventilkolbens 4 der gesamte Ringkanal zwischen der Ventilbohrung 6 und dem Außenumfang des Ventilmittelbereichs 16 zur Verfügung, was zu einem schnellen Ausströmen der Hydraulikflüssigkeit aus dem Steuerraum 3 führt. Die Tankkanäle 9.1, 10.1 und die Tankleitung 11 sind unabhängig voneinander, so dass insbesondere für die Entlastung des Steuerraums 3 keine Rückwirkung durch Druckspitzen vorhanden ist, die durch Induktivität und Kapazität der mit dem Tankkanal 9.1 und Tankleitung verursacht werden.

Des Weiteren sind die Länge des Ventilbereichs 15, des Ventilmittelbereichs 16 und des Ventilkopfs 17 so aufeinander abgestimmt, dass nach einer bestimmten Verschiebestrecke des Ventilkolbens 4 nach oben (Fig. 1) die Steuergeometrie 19 den Ringkanal 8 und Tankkanal 10.1 überdeckt und anschließend in den letzten Abschnitt der Ventilbohrung 6 kurz vor dem Steuerraum 3 eintaucht. Hierdurch wird die Bewegung des Ventilkolbens 4 abgedämpft, der Steuerraum 3 wieder verschlossen und das noch vorhandene Hydraulikflüssigkeitsvolumen zum Stoppen der Ventilkolbenbewegung verwendet. Die hierfür notwendige Strecke ist geringer als der Abstand einer Stirnfläche 17.1 des Ventilkopfs 17 zur gegenüberliegenden. Wandung des Steuerraums 3, so dass es nicht zu einem mechanischen Anschlagen des Ventilkolbens 4 am Gehäuse 2 kommt. Bei diesem Vorgang dient also der Ventilbereich 15 auch zum Verschließen der Pilotstufe 8.

Sollten längere Tankleitungen (> 1 m) erforderlich sein, kann zur Entkopplung der hydraulischen Induktivität der Leitung ein Zwischentank oder Speicher vorgesehen werden.

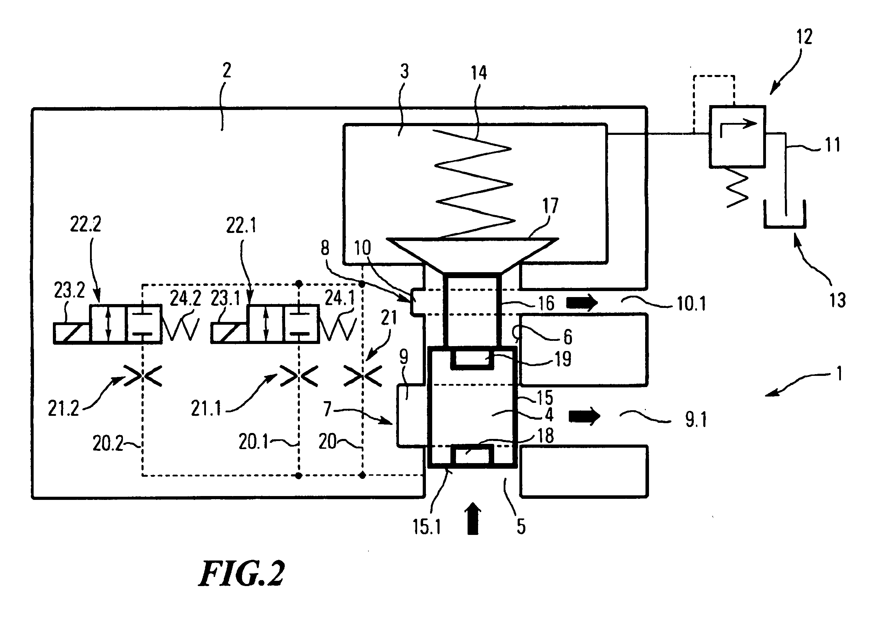

Im Folgenden wird anhand der Fig. 2 ein zweites Ausführungsbeispiel der vorliegenden Erfindung näher erläutert. Es soll nur auf die wesentlichen Unterschiede zum vorangegangenen Ausführungsbeispiel eingegangen werden, weshalb unter Zuhilfenahme derselben Bezugsziffern auf gleiche und wirkungsgleiche Bauteile Bezug genommen und auf die obige Beschreibung verwiesen werden kann.

Ein wesentlicher Unterschied besteht in der Ausgestaltung der Düseneinrichtung. Neben dem Düsenkanal 20 und der Düse 21 befinden sich im Gehäuse 2 noch zwei zum ersten Düsenkanal 20 parallel geschaltete Düsenkanäle 20.1 und 20.2, die jeweils eine eigene Düse 21.1 und 21.2 aufweisen. Im vorliegenden Ausführungsbeispiel sind die Düsen 21, 21.1 und 21.2 identisch ausgestaltet. Es besteht aber durchaus die Möglichkeit, auch unterschiedliche Düsen, insbesondere unterschiedliche Strömungswiderstände, zu verwenden und die Variationsmöglichkeiten zu verbessern (z.B. ähnlich einem Binärcode). In den Düsenkanälen 20.1 und 20.2 ist jeweils nachfolgend der zugehörigen Düsen 21.1 und 21.2 ein 2/2-Wege-Schaltventil 22.1 und 22.2 angeordnet, mittels dessen der jeweils zugehörige Düsenkanal 20.1 oder 20.2 zum Düsenkanal 20 hinzuschaltbar oder von diesem entkoppelbar ist. Die Schaltventile 22.1 und 22.2 sind in der Fig. 2 in ihrer geschlossenen Stellung dargestellt. Mittels eines Solenoids 23.1 oder 23.2 und einer entsprechend entgegenwirkenden Druckfeder 24.1 oder 24.2 lassen sich die verschiedenen Schaltstellungen elektrisch ansteuern. Im vorliegenden Fall drückt die jeweilige Druckfeder 24.1 und 24.2 im stromlosen Zustand das Schaltventil 22.1 oder 22.2 in die geschlossen Stellung. Alternativ besteht auch die Möglichkeit, die Schaltventile im stromlosen Zustand durchgeschaltet auszugestalten. Dies hängt maßgeblich von dem gewünschten Effekt ab.

Mittels der so ausgestalteten Düseneinrichtung lässt sich der Strömungswiderstand durch das Zu- oder Abschalten der Düsenkanäle 20.1 und 20.2 variieren und somit die gewünschte auslösende Druckanstiegsgeschwindigkeit verändern. Die zugehörigen Düsen 21.1 und 21.2 können aber auch nach den jeweiligen Schaltventilen 22.1 und 22.2 angeordnet sein. Des Weiteren könnte auch im Düsenkanal 20 in ähnlicher Weise ein Schaltventil angeordnet werden.

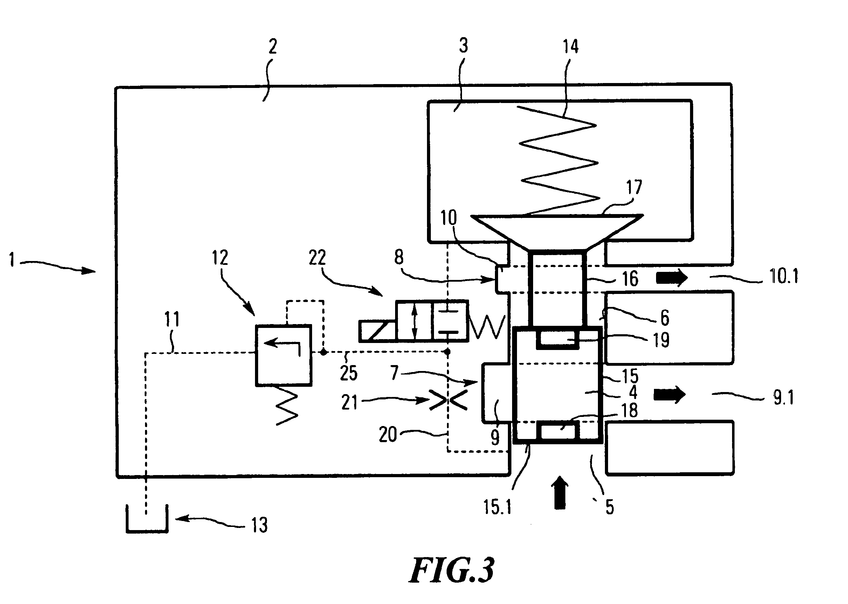

Anhand der Fig. 3 wird ein weiteres Ausführungsbeispiel der vorliegenden Erfindung näher erläutert. Es soll nur auf die wesentlichen Unterschiede zu den vorangegangenen Ausführungsbeispielen eingegangen werden, weshalb unter Zuhilfenahme derselben Bezugsziffern auf gleiche und wirkungsgleiche Bauteile Bezug genommen und auf die obige Beschreibung verwiesen werden.

Der Hauptunterschied besteht wieder in der Ausgestaltung der Düseneinrichtung. Gem. Fig. 3 ist in dem einzigen Düsenkanal 20 ein 2/2-Wege-Schaltventil 22 angeordnet, dessen Druckfeder 24 im stromlosen Zustand das Schaltventil 22 in die geschlossene Stellung drückt. Sobald der Solenoid 23 mit Strom beaufschlagt wird, öffnet das Schaltventil 22. Hierdurch kann die Düseneinrichtung zu- oder abgeschaltet werden. Es besteht also die Möglichkeit, das RC-Glied vollständig aufzuheben oder zuzuschalten.

Ein weiterer Unterschied besteht in der Anordnung des Druckbegrenzungsventils 12. Dieses ist nunmehr im Gehäuse 2 integriert und steht über eine Stichleitung 25 mit dem Düsenkanal 20 in Verbindung. Die Tankleitung 11 ist ebenfalls teilweise in dem Gehäuse 2 integriert. Durch diese Anordnung kann gemeinsam mit der Düseneinrichtung die Funktion des Druckbegrenzungsventils 12 abgeschaltet werden. Ist die Abschaltung des Druckbegrenzungsventils 12 nicht gewünscht, wird das Druckbegrenzungsventil 12 direkt am Steuerraum 3 angeschlossen, siehe Fig. 1.

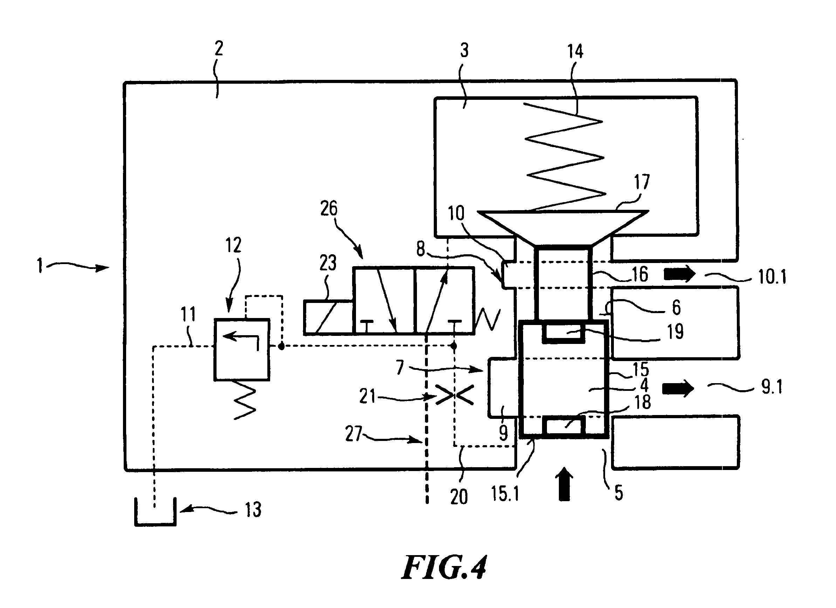

Im Folgenden wird anhand der Fig. 4 ein viertes Ausführungsbeispiel der vorliegenden Erfindung näher erläutert. Dieses Ausführungsbeispiel ist insbesondere ähnlich zum vorangegangen Ausführungsbeispiel der Fig. 3. Es soll nur auf die wesentlichen Unterschiede zu diesem vorangegangenen Ausführungsbeispiel eingegangen werden, weshalb unter Zuhilfenahme derselben Bezugsziffern auf gleiche und wirkungsgleiche Bauteile Bezug genommen und auf die obigen Beschreibungen zu den vorangegangenen Ausführungsbeispielen verwiesen werden kann.

Der wesentliche Unterschied besteht in der Ausgestaltung des Schaltventils. Es handelt sich nunmehr um ein 3/2-Wege-Schaltventil 26. Des Weiteren ist im Gehäuse 2 ein Kanal 27 eines externen Steuerdrucks integriert. In der in Fig. 4 gezeigten Stellung ist der Steuerraum 3 im stromlosen Zustand des Schaltventils 26 über den Kanal 27 mit einem externen Steuerdruck beaufschlagbar. Hierdurch kann das Lastschaltventil 1 als vorgesteuertes Druckschaltventil eingesetzt werden. Bei Strombeaufschlagung des Solenoids 23 wird der Düsenkanal mit dem Steuerraum 3 verbunden. Durch diese Anordnung kann gemeinsam mit der Düseneinrichtung die Funktion des Druckbegrenzungsventils 12 abgeschaltet werden. Ist die Abschaltung des Druckbegrenzungsventils 12 nicht gewünscht, wird das Druckbegrenzungsventil 12 direkt am Steuerraum 3 angeschlossen.

Der Kanal 27 kann alternativ mit dem Tank verbunden sein. Ist der Kanal 27 mit dem Tank verbunden, kann damit das Lastschaltventil gezielt mit Hilfe eines elektrischen Signals geöffnet werden, d.h. eine Anlage drucklos gemacht werden (der Öffnungsdruck des Lastschaltventils entspricht dann dem Federdruck). Auch hier kann die Schaltlogik des Schaltventils 26 umgekehrt sein, d.h. stromlos ist die Düseneinrichtung aktiviert.

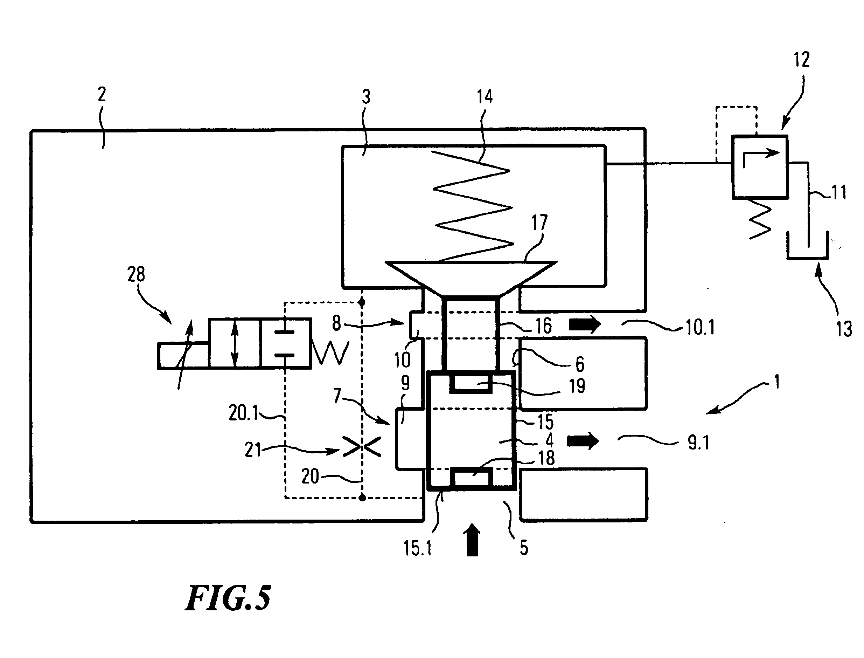

Im Folgenden wird anhand der Fig. 5 ein fünftes Ausführungsbeispiel der vorliegenden Erfindung näher erläutert. Es soll nur auf die wesentlichen Unterschiede zu den vorangegangenen Ausführungsbeispielen eingegangen werden, weshalb unter Zuhilfenahme derselben Bezugsziffern auf gleiche und wirkungsgleiche Bauteile Bezug genommen und auf die obige Beschreibung verwiesen werden kann.

Ein wesentlicher Unterschied zur Ausführungsform gem. Fig. 1 besteht darin, dass im Gehäuse 2 neben dem Düsenkanal 20 ein zweiter Düsenkanal 20.1 parallel geschaltet ist, in den allerdings anstelle einer einfachen Düse ein Proportionalventil 28 angeordnet ist, mittels dessen eine stufenlos verstellbare Düse erzeugt wird. Ausgehend von der Grundfunktion des Düsenkanals 20 kann dann eine Verstellung des Düsenquerschnittes in stufenloser Weise mittels des Proportionalventils 28 erfolgen. Alternativ kann ein solches Proportionalventil auch die Düse 21 im Düsenkanal 20 ersetzen, so dass mit einem einzigen Proportionalventil ein großes Düsenspektrum stufenlos bis hin zur vollständigen Abschaltung des RC-Gliedes erzeugbar ist.

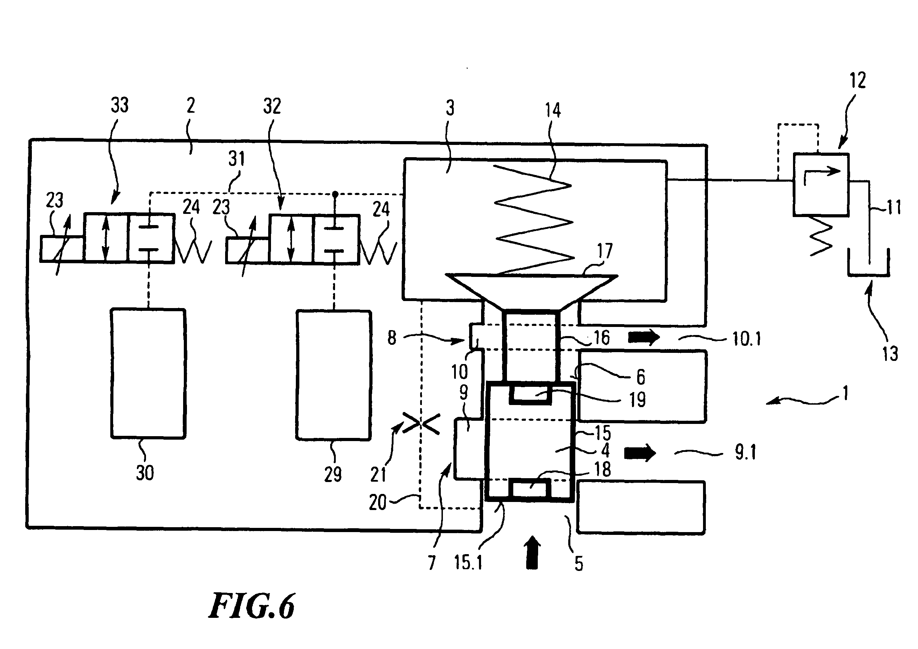

Im Folgenden soll anhand der Fig. 6 ein sechstes Ausführungsbeispiel der vorliegenden Erfindung näher erläutert werden. Es soll nur auf die wesentlichen Unterschiede zum ersten Ausführungsbeispiel eingegangen werden, weshalb unter Zuhilfenahme derselben Bezugsziffern auf gleiche und wirkungsgleiche Bauteile Bezug genommen und auf die obige Beschreibung verwiesen werden kann.

Der wesentliche Unterschied der in Fig. 6 gezeigten Konstruktion besteht darin, dass das Volumen des Steuerraums 3 verändert werden kann. Hierzu ist im Gehäuse 2 eine erste Ergänzungskammer 29 zum Erzeugen eines ersten ergänzenden Steuerraumvolumenbereichs integriert und eine zweite Ergänzungskammer 30 zur Erzeugung eines zweiten ergänzenden Steuervolumenbereichs integriert. Im vorliegenden Ausführungsbeispiel ist das Volumen der beiden Ergänzungskammem 29 und 30 im Wesentlichen identisch. Alternativ können diese aber auch unterschiedlich zur Erzeugung einer größeren Varianz ausgestaltet sein. Beide Ergänzungskammem 29 und 30 sind über eine Ergänzungsleitung 31 mit dem Steuerraum 3 verbunden. Des Weiteren ist jede Ergänzungskammer 29 und 30 über ein zugeordnetes 212-Wege-Schaltventil 32 bzw. 33 von der Ergänzungsleitung 31 abkoppelbar oder zu dieser zuschaltbar, so dass diese jeweils einzeln oder gemeinsam mit dem Steuerraum 3 verbunden werden können, um somit das Volumen des Steuerraums 3 zu verändern. Hierdurch ändert sich auch das Verhalten des RC-Gliedes, und die Druckanstiegsgeschwindigkeit, die zur Auslösung des Lastschaltventils 1 führen soll, ist einstellbar. In Fig. 6 sind die Schaltventile 32 und 33 im stromlosen Zustand geschlossen und trennen die Ergänzungskammer 29 und 30 vom Steuerraum 3. Eine umgekehrte Ausgestaltung, so dass diese im stromlosen Zustand mit dem Steuerraum 3 verbunden sind, ist ebenfalls denkbar.

Die Anzahl und die Größe der Ergänzungskammem ist beliebig wählbar, um den bestmöglichen Kombinationseffekt und damit eine möglichst breite Einstellungsmöglichkeit zu erzielen.

Selbstverständlich lässt sich insbesondere die Ausgestaltung gemäß dem Ausführungsbeispiel der Fig. 6 mit sämtlichen anderen Varianten, bei dem die Düseneinrichtung modifiziert wird (siehe insbesondere Ausführungsbeispiele der Fig. 2 bis 5) kombinieren, um die Einstellmöglichkeit nochmals zu verbessern.

Auch weitere Kombinationen der oben beschriebenen Ausführungsformen können, soweit sinnvoll, durchgeführt werden. Die Ventilkolben 4 werden bei allen Ausführungsformen möglichst massearm ausgeführt, so dass es zu schnellen Öffnungsbewegungen kommt.


## Patentansprüche

1. Hydraulisches Lastschaltventil (1) mit einem Gehäuse (2) mit einem Steuerraum (3), einem Lastkanal (5), mindestens einem Entlastungskanal (9, 9.1;10,10.1) und einem im Gehäuse (2) gegen eine Feder (14) zwischen einer Normal- und einer überlaststellung verschiebbar geführten Ventilkörper (4), wobei der Ventilkörper (4) in der Normalstellung den Lastkanal (5) und den Steuerraum (3) von dem mindestens einen Entlastungskanal (9, 9.1;10,10.1) trennt, wobei das Gehäuse (2) eine Düseneinrichtung aufweist, mittels derer der Lastkanal (5) mit dem Steuerraum (3) zumindest in der Normalstellung derart verbindbar ist, dass der Ventilkörper (4), die Düseneinrichtung und der Steuerraum (3) ein hydraulisches RC-Glied bilden, das derart dimensioniert ist, dass der Ventilkörper (4) im Wesentlichen unabhängig vom Lastdruck bei Überschreiten einer vorbestimmten Druckanstiegsgeschwindigkeit in die Überlaststellung schaltet und dabei den Lastkanal (5) und den Steuerraum (3) mit dem mindestens einen Entlastungskanal (9,9.1;10;10.1) verbindet, **dadurch gekennzeichnet, dass** der Ventilkörper (4) eine Pilotstufe (8) zum Trennen und Öffnen des Steuerraums (3) vom und zum mindestens einen Entlastungskanal (10,10.1) und eine Laststufe (7) zum Trennen und Öffnen des Lastkanals (5) vom und zum mindestens einen Entlastungskanal (9,9.1) aufweist.

2. Hydraulisches Lastschaltventil (1) nach Anspruch 1, **dadurch gekennzeichnet, dass** die Pilotstufe (8) des Ventilkörpers (4) mit einem ersten Entlastungskanal (10,10.1) und die Laststufe (7) mit einem zweiten Entlastungskanal (9,9.1) verbindbar ist.

3. Hydraulisches Lastschaftventil (1) nach einem der Ansprüche 1 bis 2, **dadurch gekennzeichnet, dass** die Düseneinrichtung einen veränderbaren Strömungsquerschnitt aufweist.

**4.** Hydraulisches Lastschaltventil (1) nach Anspruch 3, **dadurch gekennzeichnet, dass** der Strömungsquerschnitt der Düseneinrichtung stufenlos veränderbar ist.

**5.** Hydraulisches Lastschaltventil (1) nach Anspruch 4, **dadurch gekennzeichnet, dass** die Düseneinrichtung ein Proportionalventil (28) umfasst.

**6.** Hydraulisches Lastschaltventil (1) nach einem der Ansprüche 1 bis 5, **dadurch gekennzeichnet, dass** die Düseneinrichtung zu- und abschaltbar ausgestaltet ist.

**7.** Hydraulisches Lastschaltventil (1) nach Anspruch 6, **dadurch gekennzeichnet, dass** ein Schaltventil (22,26) vorgesehen ist, das wahlweise die Düseneinrichtung zu- oder abschaltend ausgestaltet ist, das Gehäuse (2) einen externen Steuerdruckanschluss (27) aufweist und das Schaltventil (26) weiter derart ausgestaltet ist, dass im abgeschalteten Zustand der Düseneinrichtung der Steuerraum (3) mit dem externen Steuerdruckanschluss (27) verbunden ist.

**8.** Hydraulisches Lastschaltventil (1) nach einem der Ansprüche 1 bis 7, **dadurch gekennzeichnet, dass** die Düseneinrichtung mindestens zwei den Lastkanal (5) mit dem Steuerraum (3) zumindest in der Normalstellung verbindbare Düsenkanäle (20,20.1,20.2) aufweist und zumindest einer der Düsenkanäle (20.1,20.2) zu- und abschaltbar ausgestaltet ist.

**9.** Hydraulisches Lastschaltventil (1) nach einem der Ansprüche 1 bis 8, **dadurch gekennzeichnet, dass** der Steuerraum (3) ein veränderbares Volumen aufweist.

**10.** Hydraulisches Lastschaltventil (1) nach Anspruch 9, **dadurch gekennzeichnet, dass** der Steuerraum (3) in mindestens zwei mittels mindestens eines Schaltventils (32,33) voneinander trennbare Steuerraumvolumenbereiche (3,29,30) unterteilt ist.

**11.** Hydraulisches Lastschaltventil (1) nach einem der Ansprüche 2 bis 10, **dadurch gekennzeichnet, dass** die Pilotstufe (8) des Ventilkörpers (4) derart ausgestaltet ist, dass diese beim Öffnungsvorgang erst den Steuerraum (3) zum mindestens einen Entlastungskanal (10,10.1) öffnet und nach einer vorbestimmten Wegstrecke und vor einem mechanischen Anschlagen den Steuerraum(3) wieder von dem mindestens einem Entlastungskanal (10,10.1) trennt.

**12.** Hydraulisches Lastschaltventil (1) nach einem der Ansprüche 1 bis 11, **dadurch gekennzeichnet, dass** an dem Steuerraum (3) ein Druckbegrenzungsventil (12) oder Proportionaldruckbegrenzungsventil angeschlossen ist.

**13.** Hydraulisches Lastschaltventil (1) nach einem der Ansprüche 1 bis 12, **dadurch gekennzeichnet, dass** das Gehäuse (2) von einem Steuerblock gebildet ist und zumindest die Düseneinrichtung, der Steuerraum (3), der Lastkanal (5) und der mindestens eine Entlastungskanal (9,9.1;10,10.1) im Steuerblock integriert sind.

**14.** Hydraulisches Lastschaltventil (1) nach einem der Ansprüche 1 bis 13, **dadurch gekennzeichnet, dass** das RC- Glied derart dimensioniert ist, dass die vorbestimmte Druckanstiegsgeschwindigkeit im Bereich von 1000 bis 100000 bar/s liegt.

**Claims**

**1.** A hydraulic load switch valve (1) with a housing (2) with a control chamber (3), a load passage (5), at least one pressure-relief passage (9,9.1;10,10.1) and a valve body (4) guided in the housing (2) against a spring (14) between a normal position and an overload position, wherein in the normal position the valve body (4) separates the load passage (5) and the control chamber (3) from the at least one pressure-relief passage (9,9.1;10,10.1), wherein the housing (2) has a nozzle device, by means of which the load passage (5) can be connected to the control chamber (3) at least in the normal position in such a way that the valve body (4), the nozzle device and the control chamber (3) form a hydraulic RC element which is of such dimensions that the valve body (4), substantially independently of the load pressure upon exceeding a predetermined pressure-increase rate, shifts into the overload position and then connects the load passage (5) and the control chamber (3) to the at least one pressure-relief passage (9,9.1; 10,10.1), **characterised in that** the valve body (4) has a pilot stage (8) for separating and opening the control chamber (3) from and to the at least one pressure-relief passage (10,10.1) and a load stage (7) for separating and opening the load passage (5) from and to the at least one pressure-relief passage (9,9.1).

2. A hydraulic load switch valve (1) according to Claim 1, **characterised in that** the pilot stage (8) of the valve body (4) can be connected to a first pressure-relief passage (10,10.1) and the load stage (7) can be connected to a second pressure-relief passage (9,9.1).

3. A hydraulic load switch valve (1) according to one of Claims 1 to 2, **characterised in that** the nozzle device is of variable flow cross-section.

4. A hydraulic load switch valve (1) according to Claim 3, **characterised in that** the flow cross-section of the nozzle device is continuously variable.

5. A hydraulic load switch valve (1) according to Claim 4, **characterised in that** the nozzle device comprises a proportional valve (28).

6. A hydraulic load switch valve (1) according to any one of Claims 1 to 5, **chacterised in that** the nozzle device is designed to be switched on and off.

7. A hydraulic load switch valve (1) according to Claim 6, **characterised in that** a switching valve (22,26) is provided which, selectively, is designed to switch the nozzle device on or off, the housing (2) has an external control pressure connector (27) and the switching valve (26) is further designed so that, in the switched-off state of the nozzle device, the control chamber (3) is connected to the external control pressure connector (27).

8. A hydraulic load switch valve (1) according to any one of Claims 1 to 7, **characterised in that** the nozzle device has at least two nozzle ducts (20,20.1,20.2) which can be connected to the control chamber (3) at least in the normal position, and at least one of the nozzle ducts (20.1,20.2) is designed to be switched on and off.

9. A hydraulic load switch valve (1) according to any one of Claims 1 to 8, **characterised in that** the control chamber (3) is of variable volume.

10. A hydraulic load switch valve (1) according to Claim 9, **characterised in that** the control chamber (3) is divided into at least two control chamber volume zones (3,29,30) which can be separated from one another by means of at least one switching valve (32,33).

11. A hydraulic load switch valve (1) according to any one of Claims 2 to 10, **characterised in that** the pilot stage (8) of the valve body (4) is designed so that, during the opening process, it opens firstly the control chamber (3) to the at least one pressure-relief passage (10,10.1) and, after a predetermined distance and before mechanical abutment, separates the control chamber (3) again from the at least one pressure-relief passage (10,10.1).

12. A hydraulic load switch valve (1) according to any one of Claims 1 to 11, **characterised in that** a pressure-limiting valve (12) or a proportional pressure-limiting valve is connected to the control chamber (3).

13. A hydraulic load switch valve (1) according to any one of Claims 1 to 12, **characterised in that** the housing (2) is formed by a control block and at least the nozzle device, the control chamber (3), the load passage (5) and the at least one pressure-relief passage (9,9.1;10,10.1) are integrated into the control block.

14. A hydraulic load switch valve (1) according to any one of Claims 1 to 13, **characterised in that** the RC element is of such dimensions that the predetermined pressure increase rate is within the range of 1,000 to 100,000 bars.

**Revendications**

1. Soupape hydraulique de commutation de charge (1) avec une enveloppe (2) comportant un espace de commande (3), un conduit de charge (5), au moins un conduit de décharge (9, 9.1 ; 10, 10.1) et un corps de soupape (4) guidé coulissant dans l'enveloppe (2), à l'encontre d'un ressort (14), entre une position normale et une position de surcharge, étant précisé que le corps de soupape (4), dans la position normale, sépare le conduit de charge (5) et l'espace de commande (3) du ou des conduits de décharge (9, 9.1 ; 10, 10.1), et que l'enveloppe (2) comporte un dispositif d'injection grâce auquel le conduit de charge (5) est apte à être relié à l'espace de commande (3) au moins dans la position normale de telle sorte que le corps de soupape (4), le dispositif d'injection et l'espace de commande (3) forment un circuit RC hydraulique qui est dimensionné pour que le corps de soupape (4) passe en position de surcharge globalement indépendamment de la pression de charge en cas de dépassement d'une vitesse de montée en pression prédéfinie, reliant ainsi le conduit de charge (5) et l'espace de commande (3) audit conduit de décharge (9,9.1;10,10.1), **caractérisée en ce que** le corps de soupape (4) présente un niveau pilote (8) pour séparer l'espace de commande (3) du ou des conduits de décharge (10, 10.1) et l'ouvrir, et un niveau de charge (7) pour séparer le conduit de charge (5) du ou des conduits de décharge (9, 9.1) et l'ouvrir.

2. Soupape hydraulique de commutation de charge (1) selon la revendication 1, **caractérisée en ce que** le niveau pilote (8) du corps de soupape (4) est apte à être relié à un premier conduit de décharge (10, 10.1) et le niveau de charge (7) est apte à être relié à un second conduit de décharge (9, 9.1).

3. Soupape hydraulique de commutation de charge (1) selon l'une des revendications 1 à 2, **caractérisée en ce que** le dispositif d'injection présente une section transversale d'écoulement variable.

4. Soupape hydraulique de commutation de charge (1) selon la revendication 3, **caractérisée en ce que** la section transversale d'écoulement du dispositif d'injection est variable de manière continue.

5. Soupape hydraulique de commutation de charge (1) selon la revendication 4, **caractérisée en ce que** le dispositif d'injection comprend une soupape proportionnelle (28).

6. Soupape hydraulique de commutation de charge (1) selon l'une des revendications 1 à 5, **caractérisée en ce que** le dispositif d'injection est conçu pour pouvoir être raccordé et séparé.

7. Soupape hydraulique de commutation de charge (1) selon la revendication 6, **caractérisée en ce qu'**il est prévu une vanne de commutation (22, 26) qui est conçue pour raccorder ou séparer sélectivement le dispositif d'injection, l'enveloppe (2) comporte un raccordement de pression de commande externe (27), et la vanne de commutation (26) est par ailleurs conçue pour que dans la position séparée du dispositif d'injection, l'espace de commande (3) soit relié au raccordement de pression de commande externe (27).

8. Soupape hydraulique de commutation de charge (1) selon l'une des revendications 1 à 7, **caractérisée en ce que** le dispositif d'injection comporte au moins deux conduits d'injection (20, 20.1, 20.2) qui sont aptes à relier le conduit de charge (5) à l'espace de commande (3) au moins dans la position normale, et l'un au moins des conduits d'injection (20.1, 20.2) est conçu pour pouvoir être raccordé et séparé.

9. Soupape hydraulique de commutation de charge (1) selon l'une des revendications 1 à 8, **caractérisée en ce que** l'espace de commande (3) présente un volume variable.

10. Soupape hydraulique de commutation de charge (1) selon la revendication 9, **caractérisée en ce que** l'espace de commande (3) est divisé en au moins deux zones de volume d'espace de commande (3, 29, 30) aptes à être séparées l'une de l'autre à l'aide d'au moins une vanne de commutation (32, 33).

11. Soupape hydraulique de commutation de charge (1) selon l'une des revendications 2 à 10, **caractérisée en ce que** le niveau pilote (8) du corps de soupape (4) est conçu pour ouvrir tout d'abord, lors de l'opération d'ouverture, l'espace de commande (3) sur le ou les conduits de décharge (10, 10.1), et pour séparer à nouveau, après une course prédéfinie et avant de buter mécaniquement, l'espace de commande (3) du ou des conduits de décharge (10, 10.1).

12. Soupape hydraulique de commutation de charge (1) selon l'une des revendications 1 à 11, **caractérisée en ce qu'**une soupape de limitation de pression (12) ou une soupape de limitation de pression proportionnelle est raccordée à l'espace de commande (3).

13. Soupape hydraulique de commutation de charge (1) selon l'une des revendications 1 à 12, **caractérisée en ce que** l'enveloppe (2) est formée par un bloc de commande, et au moins le dispositif d'injection, l'espace de commande (3), le conduit de charge (5) et le ou les conduits de décharge (9, 9.1 ; 10, 10.1) sont intégrés dans le bloc de commande.

**14.** Soupape hydraulique de commutation de charge (1) selon l'une des revendications 1 à 13, **caractérisée en ce que** le circuit RC est dimensionné de telle sorte que la vitesse de montée en pression prédéfinie est située dans la plage de 1000 à 100000 bar/s.

*FIG.1*

**FIG.2**

**FIG.3**

*FIG.4*

*FIG.5*

*FIG.6*

**EP 2 189 667 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19643104 A1

- US 4015620 A